# EUROPEAN PATENT APPLICATION

(11) **EP 3 525 022 A1**
(43) Date of publication of application: **14.08.2019**
(21) Application number: 17858433.0
(22) Date of filing: 04.10.2017
(51) Int. Cl.: G02B 6/44

(54) **SLOT ROD AND OPTICAL FIBER CABLE**

(30) Priority: 04.10.2016 JP 2016196561
(71) Applicant: Sumitomo Electric Industries, Ltd., Osaka-shi, Osaka 541-0041 (JP)
(72) Inventor: TAKEDA, Kentaro, Yokohama-shi, Kanagawa 244-8588 (JP); TAKAHASHI, Ken, Yokohama-shi, Kanagawa 244-8588 (JP)
(74) Representative: Hoffmann Eitle
(86) International application number: PCT/JP2017/036114
(87) International publication number: WO 2018/066596

(57) **Abstract**

A slot rod having a plurality of grooves for storing a plurality of optical fibers, a first layer disposed at a center of the slot rod, a second layer provided on an outer peripheral portion of the first layer, a third layer provided on an outer peripheral portion of the second layer, and an outermost layer provided on an outer peripheral portion of the third layer, and the third layer is formed of a material having higher adhesiveness to the outermost layer than a material in a case where the third layer is formed of the same material as the outermost layer.

## Description

### TECHNICAL FIELD

The present invention relates to a slot rod and a fiber optic cable.
This application claims priority from Japanese Patent Application No. 2016-196561, filed on October 4, 2016, the entire subject matter of which is incorporated herein by reference.

### BACKGROUND ART

A slot rod in an optical fiber cable is known. The slot rod includes spiral grooves that store optical fibers on an outer periphery thereof. For example, slot rods described in Patent Documents 1 and 2 include a plurality of plastic layers around a tensile strength member at a center, respectively.

### CITATION LIST

### PATENT LITERATURE

Patent Document 1: JP-UM-2-117506
Patent Document 2: JP-UM-2-117507

### SUMMARY OF INVENTION

A first aspect of the present invention provides a slot rod that includes a plurality of grooves which store a plurality of optical fibers, the slot rod including:
a tension member at a center of the slot rod,
a first layer adhered to the tension member,
a second layer on an outer periphery of the first layer,
a third layer on an outer periphery of the second layer, and
an outermost layer on an outer periphery of the third layer, the outermost layer including the plurality of grooves,
in which the third layer is formed of a material having higher adhesion to the outermost layer than a material in a case where the third layer is formed of the same material as the outermost layer.

A second aspect of the present invention provides an optical fiber cable including:
the above slot rod,
a cable sheath covering outside of the slot rod, and
a plurality of optical fibers stored in the plurality of grooves in the slot rod.

### BRIEF DESCRIPTION OF DRAWINGS

FIG. 1 is a cross-sectional view illustrating an example of a slot rod according to an embodiment.
FIG. 2 is a cross-sectional view illustrating an example of an optical fiber cable according to the embodiment.

### DESCRIPTION OF EMBODIMENTS

### Problems to be Solved by Present Disclosure

It is common in a slot rod which stores optical fibers that, in order to ensure a groove shape and surface smoothness of the slot rod, a material such as a polyethylene resin is extruded a plurality of times around a tension member at a center to form the final groove shape.

However, it is difficult to adjust an outer diameter of an intermediate layer just inside an outermost layer when an outer diameter of the slot rod is large, which may impair productivity. For example, when the outer diameter of the intermediate layer is too small relative to a diameter at bottom portions of grooves in the outermost layer, ribs on the outermost layer may collapse during extrusion molding due to eccentricity, and the surface smoothness of the bottom portions of the grooves may deteriorate as thickness of the bottom portions of the grooves in the outermost layer increases. Meanwhile, bottom part of the grooves in the outermost layer is thin when the outer diameter of the intermediate layer is too large, which may deteriorate mechanical characteristics of the slot rod. For example, adherence between the outermost layer and the intermediate layer is weak, the ribs are likely to be peeled off, and the ribs are likely to collapse due to lateral pressure or shocks.

An object of the present disclosure is to provide a slot rod and an optical fiber cable, in which rib collapse due to shocks, lateral pressure or the like can be prevented, and a shape of grooves and surface smoothness of bottom portions of the grooves can be favorably ensured.

### Effect of Disclosure

According to the present disclosure, rib collapse due to shocks, lateral pressure or the like can be prevented, and the shape of grooves and surface smoothness of bottom portions of the grooves can be favorably ensured.

### Description of Embodiments of Present Invention

An embodiment of the present invention is listed and described.

A first aspect of the present invention provides
(1) a slot rod that includes a plurality of grooves which store a plurality of optical fibers, the slot rod including:
   a tension member at a center of the slot rod,
   a first layer adhered to the tension member,
   a second layer on an outer periphery of the first layer,
   a third layer on an outer periphery of the second layer, and
   an outermost layer on an outer periphery of the third layer, the outermost layer including the plurality of grooves,
   in which the third layer is formed of a material having higher adhesion to the outermost layer than a material in a case where the third layer is formed of the same material as the outermost layer.

   According to this configuration, the third layer is adhered to the outermost layer and is formed of a material having higher adhesion to the outermost layer than a material in a case where the third layer is formed of the same material as the outermost layer. Therefore, an adhesive force between the outermost layer and the third layer can be increased even if the outer diameter of the third layer is increased to some extent relative to the bottom portions of the grooves in the outermost layer. Therefore, rib collapse due to shocks, lateral pressure or the like can be prevented. Further, the shape of the grooves and the surface smoothness of the bottom portions of the grooves can be favorably ensured.
(2) The outermost layer is formed of polyethylene, and
   the third layer is preferably formed of an ethylene-methacrylic acid copolymer.
   When the third layer is made of an ethylene-methacrylic acid copolymer, the adhesion of the third layer is higher than an adhesion of a material when the third layer is made of polyethylene.
(3) The outermost layer is formed of polyethylene, and
   the third layer is preferably formed of polyolefin.
   When the third layer is made of polyolefin, the adhesion of the third layer is higher than an adhesion of a material when the third layer is made of polyethylene.
(4) The third layer preferably has a radial thickness of 0.01 mm or more and 1.0 mm or less.
   The third layer is hardly adhesive when the radial thickness is less than 0.01 mm, and strength of the slot rod is insufficient when the radial thickness is larger than 1.0 mm. Therefore, the third layer preferably has a radial thickness of 0.01 mm or more and 1.0 mm or less.
(5) An outer diameter of the third layer is preferably 75% or more and 99% or less of an outer diameter at bottom portions of the plurality of grooves in the outermost layer.
   When the outer diameter of the third layer is less than 75% of the outer diameter connecting the bottom portions of the plurality of grooves in the outermost layer, for example, the ribs are likely to collapse during molding when, for example, the ribs are molded by extrusion molding. When the outer diameter of the third layer is larger than 99% of the outer diameter at the bottom portions of the plurality of grooves in the outermost layer, thickness of the outermost layer at the bottom portions of the grooves is reduced, the ribs are likely to be peeled off, and the ribs are likely to collapse due to shocks, lateral pressure or the like. Therefore, the outer diameter of the third layer is preferably 75% or more and 99% or less of the outer diameter at the bottom portions of the plurality of grooves in the outermost layer.
(6) The slot rod preferably has an outer diameter of 10 mm or more at top portions of the ribs.
   When the outer diameter is less than 10 mm, production of the slot rod is difficult, and layers inside the outermost layer are hardly formed. Therefore, a slot rod having an outer diameter of 10 mm or more is preferable.
   A second aspect of the present invention provides an optical fiber cable including:
(7) the slot rod according to any one of the above (1) to (6),
   a cable sheath covering outside of the slot rod, and
   a plurality of optical fibers stored in the plurality of grooves in the slot rod.

According to this configuration, the third layer of the slot rod in the optical fiber cable is adhered to the outermost layer and is formed of a material having higher adhesion to the outermost layer than an adhesion of a material in a case where the third layer is formed of the same material as the outermost layer. Therefore, the adhesive force between the outermost layer and the third layer can be increased even if the outer diameter of the third layer is increased to some extent relative to the bottom portions of the grooves in the outermost layer. Therefore, rib collapse due to shocks, lateral pressure or the like can be prevented. Further, the shape of the grooves and the surface smoothness of the bottom portions of the grooves can be favorably ensured.

### Details of Embodiments

Specific examples of a slot rod and an optical fiber cable according to an embodiment of the present invention are described with reference to drawings hereinafter.

The present invention is not limited to these examples but indicated by the scope of claims, and is intended to include meanings equivalent to the scope of claims and all modifications within the scope.

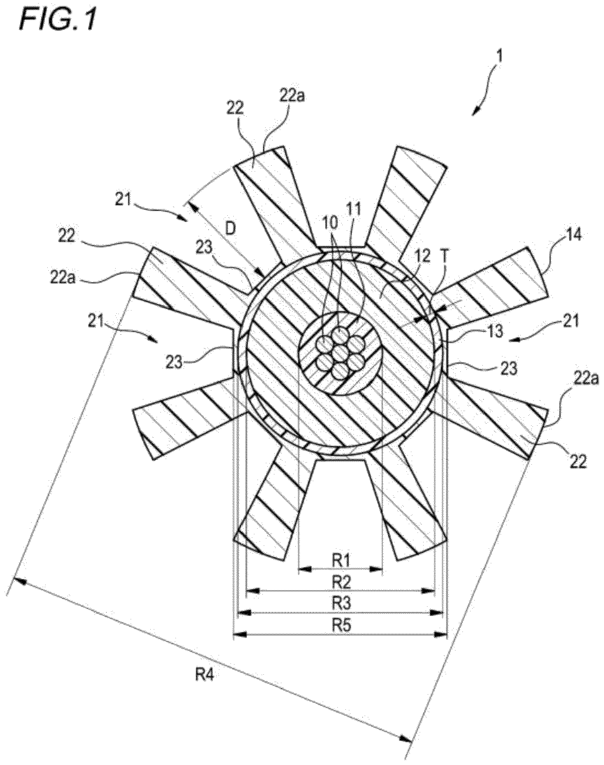

FIG. 1 is a cross-sectional view illustrating a configuration of a slot rod.

As illustrated in FIG. 1, a slot rod 1 includes a tension member 10, a first layer 11, a second layer 12, a third layer 13, and an outermost layer 14.

The tension member 10 is at a center of the slot rod 1. The tension member 10 includes a wire rod having proof stress against tension and compression, such as a steel wire and a fiber-reinforced plastic wire. The tension member 10 in FIG. 1 is stranded by a plurality of (seven) steel wires. However, the number of steel wires may be reduced depending on, for example, a size (outer diameter) of the slot rod 1, and one steel wire may also be included.

The first layer 11 is outside the tension member 10 to cover an outer periphery of the tension member 10. The first layer 11 is formed of a material having adhesion such as an ethylene-methacrylic acid copolymer, and is adhered to the tension member 10. The first layer 11 is made by extruding the ethylene-methacrylic acid copolymer or the like around the tension member 10.

The second layer 12 is on an outer periphery of the first layer 11. The second layer 12 is formed of, for example, a polyethylene resin having a high molecular density. The second layer 12 is made by extruding the polyethylene resin or the like around the first layer 11.

The third layer 13 is on an outer periphery of the second layer 12. The third layer 13 is formed of a material having high adhesion such as an ethylene-methacrylic acid copolymer and polyolefin. The third layer 13 has a radial thickness T of 0.01 mm or more and 1.0 mm or less. The third layer 13 is made by extruding the ethylene-methacrylic acid copolymer, the polyolefin, or the like around the second layer 12.

The outermost layer 14 is on an outer periphery of the third layer 13. The outermost layer 14 is formed of, for example, a polyethylene resin having a high molecular density. The outermost layer 14 includes a plurality of (for example, eight) grooves 21 on an outer periphery of the outermost layer 14. The eight grooves 21 are formed in a spiral or SZ manner in one direction along a longitudinal direction (front-rear direction in FIG. 1) of the slot rod 1.

The grooves 21 are partitioned by ribs 22 extending radially from a periphery of the third layer 13. A distance from bottom portions 23 of the grooves 21 to top portions 22a of the ribs 22 is a depth D of the grooves 21. The grooves 21 have, for example, substantially U-shaped cross sections, respectively. The grooves 21 preferably have a shape in which an optical fiber core wire stored in the grooves 21 is easily rotated, respectively. The outermost layer 14 is made by extruding the polyethylene resin or the like around the third layer 13.

In the slot rod 1 having such elements, an outer diameter R3 of the third layer 13 is 75% or more and 99% or less of an outer diameter R5 at the bottom portions 23 of the grooves 21 in the outermost layer 14. The third layer 13 is formed of a material having higher adhesion to the outermost layer 14 rather than be formed of the same polyethylene resin as the outermost layer 14. For example, the ethylene-methacrylic acid copolymer constituting the third layer 13 and the polyethylene resin constituting the outermost layer 14 have higher adhesion than between polyethylene resins in contact with each other. Further, an outer diameter R4 at the top portions 22a of the ribs 22 on the outermost layer 14 is 10 mm or more.

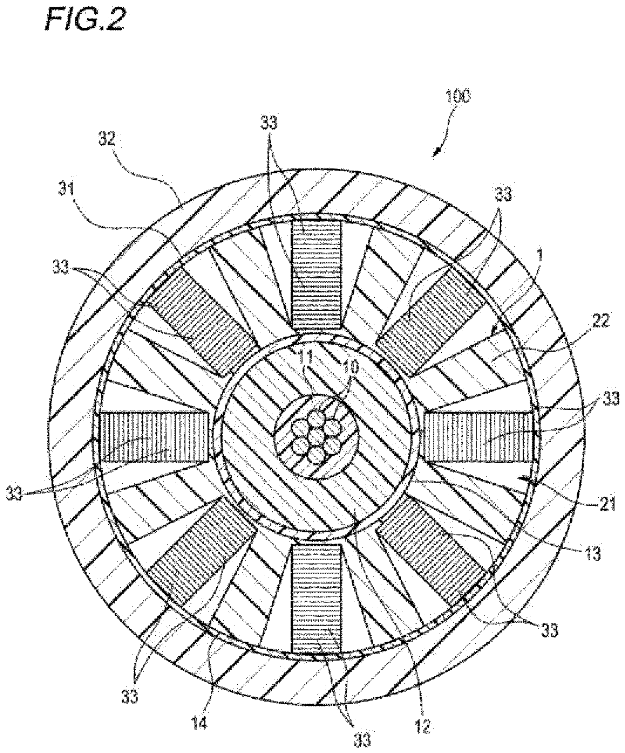

FIG. 2 is a cross-sectional view illustrating a configuration of an optical fiber cable using the slot rod 1.

As illustrated in FIG. 2, an optical fiber cable 100 includes a wrapping tape 31 wrapped around an outer periphery of the slot rod 1, and a cable sheath 32 covering outside of the slot rod 1 around which the wrapping tape 31 is wrapped. Further, optical fiber ribbons 33 formed by, for example, arranging a plurality of optical fiber core wires in parallel are stored in the grooves 21 in the slot rod 1.

The wrapping tape 31 is formed of, for example, a nonwoven fabric in a tape shape, or by adhering a substrate, such as polyethylene terephthalate, and a nonwoven fabric. The cable sheath 32 is formed of a polyethylene resin having excellent mechanical strength or flame retardancy. The optical fiber ribbons 33 stored in the grooves 21 may be, for example, laminated, or may be stored as optical units in which the optical fiber ribbons are stranded spirally in one direction.

According to the slot rod 1 and the optical fiber cable 100 configured as described above, the third layer 13 of the slot rod 1 is formed of, for example, an ethylene-methacrylic acid copolymer or polyolefin. The outermost layer 14 is formed of, for example, polyethylene. Accordingly, adhesion between the third layer 13 (ethylene-methacrylic acid copolymer, polyolefin) and the outermost layer 14 (polyethylene) is higher than adhesion of the slot rod 1 having a structure in which, for example, the third layer 13 and the outermost layer 14 are both formed of polyethylene.

When the outer diameter R3 of the third layer 13 is too small relative to the bottom portions 23 of the grooves 21 in the outermost layer 14, the ribs 22 may collapse during extrusion molding due to eccentricity, and surface smoothness of the bottom portions 23 may deteriorate as thickness of the bottom portions 23 increases. Therefore, it is desirable to make the outer diameter R3 of the third layer 13 large. However, when the outer diameter R3 is too large, mechanical characteristics may deteriorate since the bottom portions 23 of the grooves 21 in the outermost layer 14 are thin. For example, the ribs 22 are likely to collapse due to lateral pressure or shocks.

In the present embodiment, since the adhesion between the third layer 13 and the outermost layer 14 is high, an adhesive force between the third layer 13 and the outermost layer 14 is high even if the outermost layer 14 at the bottom portions 23 of the grooves 21 is made thin. Therefore, even if the outer diameter R3 of the third layer 13 is made large to avoid the above eccentricity and deterioration of the surface smoothness of the bottom portions 23, collapse of the ribs 22 is suppressed even when lateral pressure, shocks, or the like is applied to the slot rod 1 because of the high adhesive force between the third layer 13 and the outermost layer 14.

The third layer 13 has a radial thickness of 0.01 mm or more and 1.0 mm or less. Therefore, the adhesion between third layer 13 and the outermost layer 14 is sufficiently secured by the ethylene-methacrylic acid copolymer or polyolefin that constitutes the third layer 13, and strength of the slot rod 1 is sufficiently secured by this member constituting a part of the slot rod 1.

Since the outer diameter R3 of the third layer 13 is 75% or more of the outer diameter R5 at the bottom portions 23 of the grooves 21 in the outermost layer 14, the outermost layer 14 is reliably held by the third layer 13, and rib collapse that may occur during extrusion molding is further suppressed. Further, since the outer diameter R3 is 99% or less of the outer diameter R5, the adhesive force between the third layer 13 and the outermost layer 14 is ensured, and peeling-off of the ribs 22 or rib collapse due to shocks, lateral pressure or the like is prevented.

A configuration of the slot rod 1 according to the present embodiment is preferably applied to a slot rod having the outer diameter R4 of 10 mm or more at the top portions 22a of the ribs 22. When the outer diameter R4 is 10 mm or more, a difficulty in manufacturing is suppressed, and the outermost layer 14 and the first layer 11, the second layer 12, and the third layer 13 inside the outermost layer 14 that constitute the slot rod 1 are accurately formed.

### Examples

The optical fiber cable according to the present embodiment is described below with reference to specific examples.

Optical fiber cables, in which a material having high adhesion to the outermost layer 14 is used as a material of the third layer 13 in the slot rod 1 having the structure illustrated in FIG. 1, are made experimentally (Examples 1 to 4, Example 7, and Example 10). Further, optical fiber cables, in which the same material as the second layer 12 and the outermost layer 14 is used as the material of the third layer 13 in the slot rod 1 having the structure illustrated in FIG. 1, are made experimentally (Examples 5 and 6, Examples 8 and 9, Examples 11 and 12).

### (Example 1)

In an optical fiber cable of Example 1, an outer diameter R4 at the top portions 22a of the ribs 22 of the outermost layer 14 is 20 mm, and polyethylene having a high density is used as a material of the outermost layer 14. An outer diameter R5 at the bottom portions 23 of the grooves 21 is 8 mm and a depth D of the grooves 21 is 6 mm. One steel wire of 2.6 mm is used for the tension member 10, an outer diameter R1 of the first layer 11 is 3 mm, and an ethylene-methacrylic acid copolymer (adhesive) is used as a material of the first layer 11.

As for other conditions, as shown in Table 1, an outer diameter R2 of the second layer 12 is 7 mm, and polyethylene having a high density is used as a material of the second layer 12. An outer diameter R3 of the third layer 13 is 7.5 mm, thickness T of the third layer 13 is 0.25 mm, and an ethylene-methacrylic acid copolymer is used as a material of the third layer 13.

In this case, a ratio R3/R5 of the outer diameter R3 of the third layer 13 to the outer diameter R5 at the bottom portions 23 of the grooves 21 is 93.8%.

### (Example 2)

An optical fiber cable of Example 2 is the same as the optical fiber optical fiber cable of Example 1 except that polyolefin is used as a material of the third layer 13 (see Table 1).

### (Example 3)

An optical fiber cable of Example 3 is the same as the optical fiber cable of Example 1 except that an outer diameter R2 of the second layer 12 is 5 mm, an outer diameter R3 of the third layer 13 is 7 mm, and thickness T of the third layer 13 is 1 mm (see Table 1).

In this case, a ratio R3/R5 of the outer diameter R3 of the third layer 13 to the outer diameter R5 at the bottom portions 23 is 87.5%.

### (Example 4)

In an optical fiber cable of Example 4, an outer diameter R2 of the second layer 12 is 5 mm, an outer diameter R3 of the third layer 13 is 6 mm, and thickness T of the third layer 13 is to 0.5 mm (see Table 1).

In this case, a ratio R3/R5 of the outer diameter R3 of the third layer 13 to the outer diameter R5 at the bottom portions 23 is 75%.

### (Example 5)

In an optical fiber cable of Example 5, an outer diameter R4 at top portions of ribs, an outer diameter R5 at bottom portions of grooves, depth D of the grooves, a tension member, an outer diameter R1 of a first layer, and materials of an outermost layer and the first layer are the same as the optical fiber cable of Example 1.

As for other conditions, as shown in Table 1, an outer diameter R2 of a second layer is 4 mm, and polyethylene having a high density is used as a material of the second layer. An outer diameter R3 of a third layer is 5 mm, and the same polyethylene having a high density as the second layer is used as a material of the third layer.

In this case, a ratio R3/R5 of the outer diameter R3 of the third layer to the outer diameter R5 at the bottom portions is 62.5%.

### (Example 6)

An optical fiber cable of Example 6 is the same as the optical fiber cable of Example 5 except that an outer diameter R2 of a second layer is 5 mm and an outer diameter R3 of a third layer is 7.5 mm (see Table 1).

In this case, a ratio R3/R5 of the outer diameter R3 of the third layer to the outer diameter R5 at the bottom portions is 93.8%.

Optical fiber cables are respectively made under the above-described conditions and mechanical properties of the optical fiber cables are measured with results shown in Table 1.

**[Table 1]**

| | | Example 1 | Example 2 | Example 3 | Example 4 | Example 5 | Example 6 |
|---|---|---|---|---|---|---|---|
| conditions of inner layers | diameter of the second layer: R2 | Ø 7 mm | Ø 7 mm | Ø 5 mm | Ø 5 mm | Ø 4 mm | Ø 5 mm |
| | material of the second layer | polyethylene having a high density | polyethylene having a high density | polyethylene having a high density | polyethylene having a high density | polyethylene having a high density | polyethylene having a high density |
| | diameter of the third layer: R3 (T) | Ø 7.5 mm (0.25 T) | Ø 7.5 mm (0.25 T) | Ø 7 mm (1.0 mm T) | Ø 6 mm (0.5 mm T) | Ø 5 mm | Ø 7.5 mm |
| | material of the third layer | ethylene methacrylic acid copolymer | polyolefin | ethylene methacrylic acid copolymer | ethylene-methacrylic acid copolymer | polyethylene having a high density | polyethylene having a high density |
| | diameter of the third layer/diameter at bottom portions of the grooves: R3/R5 | 0.938 | 0.938 | 0.875 | 0.75 | 0.625 | 0.938 |
| results | rib collapse during extrusion | No | No | No | No | Yes | No |
| | surface roughness (Ra < 1.0) | Ra 0.5 | Ra 0.4 | Ra 0.6 | Ra 0.8 | Ra 2.4 | Ra 0.5 |
| | cable losses (< 0.25 dB/km) | MAX 0.186 dB/km | MAX 0.185 dB/km | MAX 0.195 dB/km | MAX 0.200 dB/km | MAX 0.305 dB/km | MAX 0.185 dB/km |
| | lateral characteristics (Δα < 0.1 dB/c) | Δα 0.00 dB/c | Δα 0.00 dB/c | Δα 0.00 dB/c | Δα 0.00 dB/c | Δα 0.00 dB/c | Δα 0.25 dB/c |

As shown in Table 1, in the optical fiber cable of Example 5, collapse of the ribs of the outermost layer occurs during extrusion molding due to eccentricity, since the third layer is formed of the same material as the outermost layer, and since the outer diameter R3 of the third layer is small relative to the outer diameter R5 at the bottom portions of the grooves (R3/R5 = 62.5%). Further, smoothness of surfaces of the grooves deteriorates (Ra = 2.4 µm) as thickness of the bottom portions of the grooves in the outermost layer increases. Therefore, transmission losses of the cable are increased (MAX 0.305 dB/km).

In the optical fiber cable of Example 6, lateral pressure characteristics deteriorate (Δα 0.25 dB/c) since the third layer is formed of the same material as the outermost layer, since the bottom portions of the grooves are thin because the outer diameter R3 of the third layer is large relative to the outer diameter R5 at the bottom portions of the grooves (R3/R5 = 93.85%), and since an adhesive force of the third layer to the outermost layer is low.

In contrast, in optical fiber cables of Examples 1 to 4, an ethylene-methacrylic acid copolymer or polyolefin having higher adhesion than a material (polyethylene having a high density) of third layers in Examples 5 and 6 is used as the material of the third layer 13. Accordingly, an adhesion force between the third layer 13 and the outermost layer 14 is enhanced, and increased transmission losses due to rib collapse during extrusion molding and surface roughness of the bottom portions 23 of grooves 21 or deterioration of mechanical properties such as rib collapse due to lateral pressure or shocks are prevented.

### (Example 7)

In an optical fiber cable of Example 7, an outer diameter R4 of the top portions 22a of the ribs 22 of the slot rod 1 is 30 mm. An outer diameter R5 at the bottom portions 23 of the grooves 21 is 12 mm and depth D of the grooves 21 is 9 mm. In the tension member 10, seven steel wires of 1.4 mm are stranded for the tension member 10, and an outer diameter R1 of the first layer 11 is 6 mm. Materials of the outermost layer 14 and the first layer 11 are the same as in Example 1.

As for other conditions, as shown in Table 2, an outer diameter R2 of the second layer 12 is 10 mm, and polyethylene having a high density is used as a material of the second layer 12. An outer diameter R3 of the third layer 13 is 10.5 mm, thickness T of the third layer 13 is 0.25 mm, and an ethylene-methacrylic acid copolymer is used as a material of the third layer 13.

In this case, a ratio R3/R5 of the outer diameter R3 of the third layer 13 to the outer diameter R5 at the bottom portions 23 of the grooves 21 is 87.5%.

### (Example 8)

In an optical fiber cable of Example 8, an outer diameter R4 at top portions of ribs, an outer diameter R5 at bottom portions of grooves, depth D of the grooves, a tension member, an outer diameter R1 of a first layer, and materials of an outermost layer and the first layer are the same as the optical fiber cable of Example 7.

As for other conditions, as shown in Table 2, an outer diameter R2 of a second layer is 7 mm, and polyethylene having a high density is used as a material of the second layer. An outer diameter R3 of a third layer is 8 mm, and the same polyethylene having a high density as the second layer is used as a material of the third layer.

In this case, a ratio R3/R5 of the outer diameter R3 of the third layer to the outer diameter R5 at the bottom portions is 66.7%.

### (Example 9)

An optical fiber cable of Example 9 is the same as the optical fiber cable of Example 8 except that an outer diameter R2 of a second layer is 9 mm and an outer diameter R3 of a third layer is 10.5 mm (see Table 2).

In this case, a ratio R3/R5 of the outer diameter R3 of the third layer to the outer diameter R5 at the bottom portions is 87.5%.

Optical fiber cables are respectively made under the above-described conditions and mechanical properties of the optical fiber cables are measured with results shown in Table 2.

**[Table 2]**

| | | Example 7 | Example 8 | Example 9 |
|---|---|---|---|---|
| | diameter of the second layer: R2 | Ø 10.0 mm | Ø 7.0 mm | Ø 9.0 mm |
| conditions of inner layers | material of the second layer | polyethylene having a high density | polyethylene having a high density | polyethylene having a high density |
| | diameter of the third layer: R3 (T) | Ø 10.5 mm (0.25 T) | Ø 8.0 mm | Ø 10.5 mm |
| | material of the third layer | ethylene-methacrylic acid copolymer | polyethylene having a high density | polyethylene having a high density |
| | diameter of the third layer/diameter at bottom portions of the grooves: R3/R5 | 0.875 | 0.667 | 0.875 |
| results | rib collapse during extrusion | No | Yes | No |
| | surface roughness (Ra < 1.0) | Ra 0.6 | Ra 2.8 | Ra 0.6 |
| | cable losses (< 0.25 dB/km) | MAX 0.186 dB/km | MAX 0.315 dB/km | MAX 0.186 dB/km |
| | lateral characteristics (Δα < 0.1 dB/c) | Δα 0.00 dB/c | Δα 0.00 dB/c | Δα 0.35 dB/c |

As shown in Table 2, in the optical fiber cable of Example 8, collapse of the ribs occurs during extrusion molding since the third layer is formed of the same material as the outermost layer, and since the outer diameter R3 of the third layer is small relative to the outer diameter R5 of the bottom portions of the grooves (R3/R5 = 66.7%). Further, smoothness of surfaces of the grooves deteriorates (Ra = 2.8 µm) as thickness of the bottom portions of the grooves increases. Therefore, transmission losses of the cable are increased (MAX 0.315 dB/km).

In the optical fiber cable of Example 9, lateral pressure characteristics deteriorate (Δα 0.35 dB/c) since the third layer is formed of the same material as the outermost layer, since the bottom portions of the grooves are thin because the outer diameter R3 of the third layer is large relative to the outer diameter R5 at the bottom portions of the grooves (R3/R5 = 87.5%), and since an adhesive force of the third layer to the outermost layer is low.

In contrast, in the optical fiber cable of Example 7, an ethylene-methacrylic acid copolymer having higher adhesion than a material (polyethylene having a high density) of third layers in Examples 8 and 9 is used as the material of the third layer 13. Accordingly, an adhesion force between the third layer 13 and the outermost layer 14 is enhanced, and increased transmission losses due to rib collapse during extrusion molding and surface roughness of the bottom portions 23 of grooves 21 or deterioration of mechanical properties such as rib collapse due to lateral pressure or shocks are prevented.

### (Example 10)

In an optical fiber cable of Example 10, an outer diameter R4 of the top portions 22a of the ribs 22 of the slot rod 1 is 10 mm. An outer diameter R5 at the bottom portions 23 of the grooves 21 is 6 mm and depth D of the grooves 21 is 2 mm. One steel wire of 1.8 mm is used for the tension member 10, and an outer diameter R1 of the first layer 11 is 2.4 mm. Materials of the outermost layer 14 and the first layer 11 are the same as in Example 1.

As for other conditions, as shown in Table 3, an outer diameter R2 of the second layer 12 is 4.5 mm, and polyethylene having a high density is used as a material of the second layer 12. An outer diameter R3 of the third layer 13 is 5 mm, thickness T of the third layer 13 is 0.25 mm, and an ethylene-methacrylic acid copolymer is used as a material of the third layer 13.

In this case, a ratio R3/R5 of the outer diameter R3 of the third layer 13 to the outer diameter R5 at the bottom portions 23 of the grooves 21 is 83.3%.

### (Example 11)

In an optical fiber cable of Example 11, an outer diameter R4 at top portions of ribs, an outer diameter R5 at bottom portions of grooves, depth D of the grooves, a tension member, an outer diameter R1 of a first layer, and materials of an outermost layer and the first layer are the same as the optical fiber cable of Example 10.

As for other conditions, as shown in Table 3, an outer diameter R2 of a second layer is 2.6 mm, and polyethylene having a high density is used as a material of the second layer. An outer diameter R3 of a third layer is 4 mm, and the same polyethylene having a high density as the second layer is used as a material of the third layer.

In this case, a ratio R3/R5 of the outer diameter R3 of the third layer to the outer diameter R5 at the bottom portions is 66.7%.

### (Example 12)

An optical fiber cable of Example 12 is the same as the optical fiber cable of Example 11 except that an outer diameter R3 of a third layer is 5 mm (see Table 3).

In this case, a ratio R3/R5 of the outer diameter R3 of the third layer to the outer diameter R5 at the bottom portions is 83.3%.

Optical fiber cables are respectively made under the above-described conditions and mechanical properties of the optical fiber cables are measured with results shown in Table 3.

**[Table 3]**

| | | Example 10 | Example 11 | Example 12 |
|---|---|---|---|---|
| conditions of inner layers | diameter of the second layer: R2 | Ø 4.5 mm | Ø 2.6 mm | Ø 2.6 mm |
| | material of the second layer | polyethylene having a high density | polyethylene having a high density | polyethylene having a high density |
| | diameter of the third layer: R3 (T) | Ø 5.0 mm (0.25 T) | Ø 4.0 mm | Ø 5.0 mm |
| | material of the third layer | ethylene-methacrylic acid copolymer | polyethylene having a high density | polyethylene having a high density |
| | diameter of the third layer/diameter at bottom portions of the grooves: R3/R5 | 0.833 | 0.667 | 0.833 |
| results | rib collapse during extrusion | No | Yes | No |
| | surface roughness (Ra < 1.0) | Ra 0.5 | Ra 2.8 | Ra 0.5 |
| | cable losses (< 0.25 dB/km) | MAX 0.186 dB/km | MAX 0.315 dB/km | MAX 0.185 dB/km |
| | lateral characteristics (Δα < 0.1 dB/c) | Δα 0.00 dB/c | Δα 0.00 dB/c | Δα 0.25 dB/c |

As shown in Table 3, in the optical fiber cable of Example 11, collapse of the ribs occurs during extrusion molding, since the third layer is formed of the same material as the outermost layer, and since the outer diameter R3 of the third layer is small relative to the outer diameter R5 of the bottom portions of the grooves (R3/R5 = 66.7%). Further, smoothness of surfaces of the grooves deteriorates (Ra = 2.8 µm) as thickness of the bottom portions of the grooves increases. Therefore, transmission losses of the cable are increased (MAX 0.315 dB/km).

In the optical fiber cable of Example 12, lateral pressure characteristics deteriorate (Δα 0.25 dB/c) since the third layer is formed of the same material as the outermost layer, since the bottom portions of the grooves are thin because the outer diameter R3 of the third layer is large relative to the outer diameter R5 at the bottom portions of the grooves (R3/R5 = 83.3%), and since an adhesive force of the third layer to the outermost layer is low.

In contrast, in the optical fiber cable of Example 10, an ethylene-methacrylic acid copolymer having higher adhesion than a material (polyethylene having a high density) of third layers in Examples 11 and 12 is used as the material of the third layer 13. Accordingly, an adhesion force between the third layer 13 and the outermost layer 14 is enhanced and increased transmission losses due to rib collapse during extrusion molding and surface roughness of the bottom portions 23 of grooves 21 or deterioration of mechanical properties such as rib collapse due to lateral pressure or shocks are prevented.

Although the present invention is described in detail with reference to a particular embodiment, it is apparent to those skilled in the art that various changes and modifications can be made without departing from the spirit and scope of the present invention. The numbers, positions, shapes, and the like of components described above are not limited to the above embodiment, and can be changed to suitable numbers, positions, shapes, and the like during carrying out the present invention.

### Description of Reference Numerals

- 1: slot rod
- 10: tension member
- 11: first layer
- 12: second layer
- 13: third layer
- 14: outermost layer
- 21: groove
- 22: rib
- 22a: top portion
- 23: bottom portion
- 32: cable sheath
- 100: optical fiber cable

## Claims

1. A slot rod that includes a plurality of grooves storing a plurality of optical fibers, the slot rod comprising:
a tension member at a center of the slot rod;
a first layer adhered to the tension member;
a second layer on an outer periphery of the first layer;
a third layer on an outer periphery of the second layer; and
an outermost layer on an outer periphery of the third layer, the outermost layer including the plurality of grooves,
wherein the third layer is formed of a material having higher adhesion to the outermost layer than a material in a case where the third layer is formed of the same material as the outermost layer.

2. The slot rod according to claim 1,
wherein the outermost layer is formed of polyethylene, and
wherein the third layer is formed of an ethylene-methacrylic acid copolymer.

3. The slot rod according to claim 1,
wherein the outermost layer is formed of polyethylene, and
wherein the third layer is formed of polyolefin.

4. The slot rod according to any one of claims 1 to 3,
wherein the third layer has a radial thickness of 0.01 mm or more and 1.0 mm or less.

5. The slot rod according to any one of claims 1 to 4,
wherein an outer diameter of the third layer is 75% or more and 99% or less of an outer diameter at bottom portions of the plurality of grooves in the outermost layer.

6. The slot rod according to any one of claims 1 to 5,
wherein the slot rod has an outer diameter of 10 mm or more at top portions of ribs.

7. An optical fiber cable comprising:
the slot rod according to any one of claims 1 to 6;
a cable sheath covering outside of the slot rod; and
a plurality of optical fibers stored in the plurality of grooves in the slot rod.
